# EUROPÄISCHE PATENTSCHRIFT

(11) **EP 3 786 532 B1**
(45) Veröffentlichungstag und Bekanntmachung des Hinweises auf die Patenterteilung: **28.05.2025**
(21) Anmeldenummer: 20159462.9
(22) Anmeldetag: 26.02.2020
(51) Int. Cl.: F24D 3/16, F24F 5/00, F24F 13/24

(54) **FLÄCHENWÄRMETAUSCHER, SYSTEM UND VERFAHREN**
AREA HEAT EXCHANGER, SYSTEM AND METHOD
ÉCHANGEUR DE CHALEUR DE SURFACE, SYSTÈME ET PROCÉDÉ

(30) Priorität: 28.08.2019 DE 102019123117
(43) Veröffentlichungstag der Anmeldung: 03.03.2021
(73) Patentinhaber: Schmöle GmbH, 58730 Fröndenberg (DE)
(72) Erfinder: Neumann, Till, 58640 Iserlohn (DE); Bitter, Dieter, 57413 Finnentrop (DE)
(74) Vertreter: Roche, von Westernhagen & Ehresmann

(56) Entgegenhaltungen:
- EP-A2- 2 206 970
- DE-A1- 2 443 302
- DE-A1- 4 031 062
- DE-U1- 202010 010 564
- DE-U1- 9 412 349
- FR-A1- 2 085 165

## Beschreibung

Die vorliegende Erfindung betrifft Flächenwärmetauscher, insbesondere solche zur Klimatisierung von Räumen. Diese weisen typischerweise zumindest eine Montageplatte und ein daran angeordnetes Rohrsystem auf, welches ein erhitztes oder gekühltes Medium entlang der Montageplatte leitet. Die Montageplatte ist dabei typischerweise mit Hilfe mindestens eines das Rohrsystem übergreifenden streifenartigen Wärmeleitbleches an der Montageplatte festgelegt.

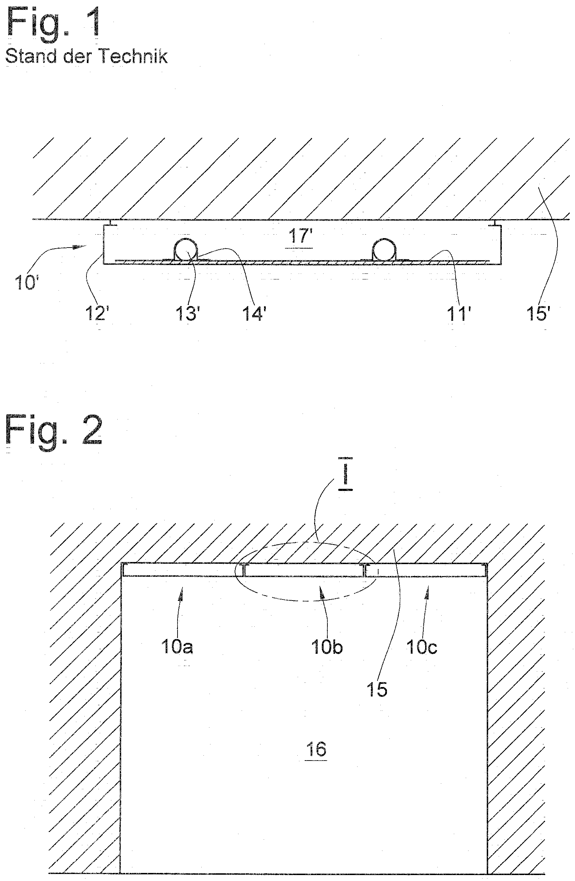

Fig. 1 zeigt einen entsprechenden, druckschriftlich nicht belegbaren Flächenwärmetauscher des Standes der Technik. Der dargestellte Flächenwärmetauscher 10' ist vom Kassetten-Typ, da die dargestellte Trägerplatte 11' in einer Kassette 12' einliegt, welche an einer Zimmer- oder Raumdecke 15 angeordnet ist. Die Trägerplatte 11' ist an ihrer Unterseite auf der Kassetteninnenseite verklebt und liegt etwa mittig ein. Auf der Trägerplatte 11' ist ein Rohrsystem 13' angeordnet und mit Hilfe eines streifenartigen Wärmeleitbleches 14' befestigt. Das streifenartige Wärmeleitblech 14' übergreift das Rohr 13' und ist beidseitig mit der Trägerplatte 11' verklebt.

Je nach Anwendungsfall kann der dargestellte Flächenwärmetauscher noch modifiziert werden: So ist es beispielsweise bekannt, den Innenraum 17' der Kassette, also auf der Oberfläche der Trägerplatte 11', Dämmmaterial einzubringen beziehungsweise den gesamten Hohlraum 17' mit Dämmmaterial auszufüllen, um eine akustische Dämmung zu gewährleisten.

In anderen Ausführungsbeispielen werden im Bereich des Raumes 17' Austrittsdüsen für (Kühl-)Luft vorgesehen. Dies sind Fälle, bei welchen der Flächenwärmetauscher zur Gebäudeklimatisierung mit Zuluft gemeinsam genutzt wird.

Die beschriebenen Maßnahmen werden im Stand der Technik teilweise auch kombiniert.

Aufgabe der vorliegenden Erfindung ist es, die aus dem Stand der Technik bekannten Wärmetauscher derart weiterzuentwickeln, dass sie bessere Klimatisierungs- beziehungsweise akustische Eigenschaften aufweisen.

Die vorliegende Erfindung löst die gestellte Aufgabe mit einem Flächenwärmetauscher nach Patentanspruch 1.

Die Idee besteht darin, im Bereich des Wärmeleitblechs (also auf diesem oder daneben) ein flügelartiges, in den Raum greifendes Element vorzusehen. Hierdurch kann die Fläche zum Wärmetausch mit dem in dem Rohrsystem geführten Medium einerseits vergrößert werden. Andererseits kann für den Fall, dass eine Luftzufuhr beziehungsweise Luftabgabedüsen im Bereich des Wärmetauschers vorgesehen sind, eine optimierte Luftführung, insbesondere nach Art von Kanälen, bereitgestellt werden. Schließlich kann auf ein Füllen des Bereiches oberhalb der Montageplatte mit akustischem Dämmmaterial verzichtet werden, da der oder die Flügel ebenfalls akustische Dämmeigenschaften bereitstellen.

Die DE 20 2010 010 564 U1 offenbart bereits ein Heiz- oder Kühlelement, bei welchem ein einen Rohrmäander übergreifendes Profil (in einem 90° Winkel) abgewinkelte Randabschnitte aufweist, welche jedoch explizit der Versteifung des Wärmeleitblech-Profils dienen. Flügel, die von einem gesonderten Element ausgebildet werden, sind aus dieser Druckschrift aber ebenso wenig bekannt, wie Flügel, die in einem von 90° Grad abweichenden Winkel, also (bezüglich des kleinsten Winkels) in einem Winkel von zwischen 0° und 90° Grad, von der Oberseite des Wärmeleitbleches und/oder der Montageplatte abstehen.

Die DE 94 12 349 U1 offenbart eine Kühldecke mit Perforationen, bei welchem jedoch keine Rohrsysteme mithilfe eines Wärmeleitbleches an einer Montageplatte festgelegt wird, sondern bei welchem Kühlelemente vorgesehen sind, die gleichzeitig Leitkanäle ausbilden und in einem 90° Grad Winkel abkragende Abschnitte vorsehen.

Außerdem offenbart die FR 2 085 165 A1 an der Decke aufgehängte Flächenwärmetauscher mit Rohren, auf welche Platten aufgelegt sind. Diese Platten sind dabei an den Rohren mithilfe von elastischen Laschen fixiert. Auf den Platten liegt Dämmmaterial auf, welches wiederum von einem Deckelelement übergriffen wird. Wärmeleitbleche sind in dieser Druckschrift aber offensichtlich nicht offenbart.

Erfindungsgemäße Flügel sind insbesondere bei offenen Systemen (beispielsweise bei sogenannten Deckensegeln) besonders vorteilhaft einsetzbar, da diese hier die für das System benötigte Konvektion sicherstellen können.

Einem Wärmeleitblech ist dabei mindestens ein Flügel zugeordnet. Typischerweise sind einem Wärmeleitblech tatsächlich aber mindestens beziehungsweise genau zwei Flügel zugeordnet, welche insbesondere achsensymmetrisch zueinander angeordnet beziehungsweise ausgebildet sind.

Typischerweise ist dem Wärmeleitblech auf jeder Seite, bezüglich des von dem Wärmeleitblech übergriffenen Rohrabschnittes, ein Flügel zugeordnet.

Jedes Wärmeleitblech weist eine streifenartige Form auf.

Insbesondere bildet das Wärmeleitblech eine (vorzugsweise zentrale) Sicke aus, in welcher ein (insbesondere gerader) Abschnitt des Rohrsystems einliegt. Zudem sind mindestens zwei Befestigungsabschnitte zum Anbringen des Wärmeleitbleches an der Montageplatte (jeweils seitlich neben dem Rohrabschnitt) vorgesehen.

Die Flügel werden von einem separaten Element bereitgestellt, insbesondere in Form eines Aufsatzelementes, welches auf das Wärmeleitblech aufgesetzt werden kann (oder eines von dem Wärmeleitblech beabstandeten Elementes).

In einem bevorzugten Fall weist auch das Aufsatzelement (wie das Wärmeleitblech) typischerweise eine im Wesentlichen identische Sicke auf (gegebenenfalls etwas vergrößert), damit das Aufsatzelement auf das Wärmeleitblech im Bereich der Sicke aufsetzbar ist. In einem alternativen bevorzugten Fall sitzt das Aufsatzelement nur auf einem (planen) Befestigungsabschnitt des Wärmeleitbleches auf und übergreift die Sicke des Wärmeleitbleches nicht.

Der Flügel steht typischerweise in einem vorgegebenen Winkel von der Montageplatte ab. Sind dem Wärmeleitblech zwei (insbesondere achsensymmetrische) Flügel zugeordnet, so stehen diese typischerweise im gleichen beziehungsweise im spiegelsymmetrisch gleichen Winkel von der Montageplatte ab. Je nach Anwendungsfall können die beiden Flügel jedoch auch in unterschiedlichen Winkeln ausgebildet werden bzw. anstehen.

Für den Fall, dass der Flügel Teil eines separaten AufsatzElementes ist, steht der Flügel dann typischerweise unter demselben Winkel auch von einem Befestigungsabschnitt des Wärmeleitbleches ab (welcher plan auf der Montageplatte aufliegt). Auch hierbei können die Flügel eines Paares in identischen oder unterschiedlichen Winkeln ausgebildet sein.

Der Flügel kann vorzugsweise streifenartig ausgebildet sein, insbesondere derart, dass der gesamte Streifen unter einem homogenen Winkel von der Montageplatte absteht und sich dieser über die Axialerstreckung des Flügels beziehungsweise des Wärmeleitbleches nicht oder im Wesentlichen nicht ändert.

Das Wärmeleitblech kann hierbei typischerweise aus Aluminium bestehen, beispielsweise aus Blankaluminium oder in einer bevorzugten Ausführungsform aus lackiertem Aluminium (beispielsweise schwarz lackiert, um bessere Wärmestrahlungseigenschaften zu ermöglichen).

Gleiches kann insbesondere auch für den Flügel gelten.

Als Montageplatte im Sinne der vorliegenden Erfindung kann insbesondere die in Bezug auf den Stand der Technik voranstehend beschriebene Trägerplatte bezeichnet werden: So wird das Rohrsystem typischerweise mit Hilfe von Wärmeleitblechen zunächst an einer Trägerplatte befestigt, insbesondere indem das Wärmeleitblech oder die Wärmeleitbleche an der Trägerplatte verklebt werden.

Die Trägerplatte kann hierbei insbesondere auch eine Lochung aufweisen, beispielsweise zwischen den Bereichen, welche von den Wärmeleitblechen beaufschlagt werden.

Die Trägerplatte kann später oder direkt (beispielsweise werksseitig) in eine Haltekassette oder ein sogenanntes Segel eingesetzt und dort befestigt, insbesondere verklebt, werden.

Von der Erfindung ist es dabei auch umfasst, dass die Trägerplatte werksseitig (noch) nicht in eine Kassette oder ein Segel eingesetzt wird, sondern mit einer aktivierbaren Klebeschicht auf der dem Rohrsystem abgewandten Seite versehen wird.

Das so hergestellte Zwischenprodukt kann dann beispielsweise an einen Montageort verbracht werden und dort vor Ort (beispielsweise durch das Entfernen einer Schutzfolie über der Klebeschicht) aktiviert und in einer entsprechenden Kassette beziehungsweise einem entsprechenden Segel verklebt werden.

In diesem Sinne sind von der Erfindung auch Flächenwärmetauscher umfasst, bei welchen eine Fläche der Haltekassette (beziehungsweise des Segels) die Montageplatte bereitstellt. In so einem Fall ist es beispielsweise denkbar, dass (insbesondere werksseitig) die Wärmeleitbleche ohne Trägerplatte unmittelbar in eine Haltekassette oder ein Segel eingebracht und dort befestigt, insbesondere verklebt, werden. In diesem Fall wird die Montageplatte dann von der Innenseite der entsprechenden Kassette beziehungsweise des Segels bereitgestellt.

Als Flächenwärmetauscher im Sinne der Erfindung wird also eine bauliche Einheit angesehen.

Eine Haltekassette oder ein Segel muss nicht enthalten sein. In einer alternativen Ausführungsform weist der Flächenwärmetauscher als bauliche Einheit aber auch bereits die Haltekassette beziehungsweise das entsprechende (typischerweise nach oben offene) Gehäuse auf.

Das Rohrsystem liegt üblicherweise als Rohrmäander vor, gebildet aus geraden Abschnitten und kurvigen Bereichen (insbesondere von etwa 180°).

Typischerweise ist insbesondere den geraden Bereichen eines Rohrmäanders jeweils ein Wärmeleitblech zugeordnet. Mit anderen Worten können insbesondere die geraden Bereiche des Rohrsystems jeweils von einem Wärmeleitblech übergriffen beziehungsweise festgelegt werden.

Das Rohr beziehungsweise das Rohrsystem besteht vorzugsweise aus Kupfer.

Außerdem sei darauf hingewiesen, dass zumindest die geraden Abschnitte des Rohrsystems im Querschnitt eine D-Form aufweisen können und die gebogenen Abschnitte beispielsweise eine kreisrunde Form (oder auch eine D-Form). Gleichwohl sind natürlich auch andere Rohrquerschnitte von der Erfindung umfasst, wie beispielsweise nicht runde (zum Beispiel im Wesentlichen dreieckige) oder durchgehend kreisrunde Querschnitte.

Der erfindungsgemäße Flügel kann typischerweise flächig, also eben und geschlossen, ausgebildet sein. Alternativ können in dem Flügel aber auch später noch beschriebene Diffusoren vorgesehen sein, welche für eine Diffusion des Luftstroms insbesondere für den Fall sorgen können, dass im Bereich des Flächenwärmetauschers Luftauslässe für zugeleitete Luft vorgesehen sind.

Die Diffusoren können insbesondere einer turbulenten Luftführung dienen.

Die Diffusoren können aus dem Wärmeleitblech oder dem Aufsatzelement beispielsweise herausgestanzt, herausgedrückt, herausgebogen sein oder ähnliches.

Hierbei ist grundsätzlich anzumerken, dass der Flügel, insbesondere als Bestandteil eines Paares von Flügeln, einen Luftkanal (mit-)ausbilden kann (unabhängig davon, ob Diffusoren vorgesehen sind oder nicht). Ein derartiger Kanal kann die Luft lenken und die Temperatureigenschaften des Flächenwärmetauschers verbessern. Ein solcher Kanal kann dabei beispielsweise nach oben offen sein und seitlich beispielsweise von zwei, insbesondere achsensymmetrisch zueinander und jeweils im Querschnitt diagonal angeordneten, Flügeln begrenzt werden.

Sind Diffusoren im beziehungsweise am Flügel vorgesehen, so können diese insbesondere Durchtrittsöffnungen aufweisen, durch welche die Luft aus dem Kanal heraus an die Außenseite des Kanals gelenkt werden kann, also beispielsweise in den Bereich zwischen zwei geraden Rohrabschnitten hinein.

Auch der Bereich zwischen zwei geraden Rohrabschnitten kann in diesem Sinne als Kanal bezeichnet werden, da er typischerweise von zwei Flügeln jeweils eines anderen Wärmeleitbleches begrenzt wird. In diesem Sinne können die jeweils zueinander ausgerichteten Flügel zweier nebeneinander angeordneter Wärmeleitbleche den Kanal ausbilden.

Ein von Flügeln ausgebildeter Luftkanal ist typischerweise (axial) im Wesentlichen gerade ausgebildet. Beispielsweise kann er eine etwa W-artige Querschnittsform aufweisen.

Die Erfindung betrifft Flächenwärmetauscher mit Rohrsystemen beziehungsweise Rohrabschnitten, welche von einem Wärmeleitblech beidseitig-geschlossen übergriffen werden. Dies bedeutet insbesondere, dass der übergriffene Abschnitt des Rohrsystems nicht seitlich aus dem Wärmeleitblech herausgeschoben werden kann, da das Wärmeleitblech typischerweise beidseitig des übergriffenen Rohrabschnittes, insbesondere plan auf der Montageplatte aufliegende, Befestigungsabschnitte aufweist. Das "beidseitig" bezieht sich in diesem Sinne also auf beide Seiten des übergriffenen (typischerweise geraden) Rohrabschnittes; das "geschlossen" darauf, dass sich das Wärmeleitblech bis zur Montageplatte erstreckt und keinen Spalt zwischen Montageplatte und dem Wärmeleitblech freigelassen wird, wie dies im Stand der Technik zur leichteren Entnahme des Rohrsystemsabschnittes bekannt ist.

Das Rohrsystem leitet hierbei ein Trägermedium, welches typischerweise die Temperatur des zu klimatisierenden Raumes beeinträchtigen soll. In der Regel handelt es sich hierbei um Wasser. Je nach Temperatur des geführten Wassers kann der Wärmetauscher zur Kühlung oder zur Erwärmung eines Raumes eingesetzt werden.

Wie bereits beschrieben, handelt es sich bei dem Flächenwärmetauscher typischerweise um einen Wärmetauscher zur Gebäude- beziehungsweise Raumklimatisierung. Von der Erfindung sind aber grundsätzlich auch andere Flächenwärmetauscher umfasst. Nicht abschließend sei beispielsweise auf Systeme verwiesen, bei welchen erwärmtes Medium genutzt wird: So kann beispielsweise im Rohrsystem über den Flächenwärmetauscher erwärmtes Wasser genutzt werden.

Die zur Herstellung des erfindungsgemäßen Flächenwärmetauschers genutzten Elemente wie Wärmeleitblech und/oder Aufsatzelement können zwecks Formgebung beispielsweise rolliert sein und/oder geprägt gepresst beziehungsweise abgekantet werden.

Gemäß einer nicht erfindungsgemäßen Ausgestaltung wird der Flügel von dem Wärmeleitblech (selber) ausgebildet. Hierzu kann das Wärmeleitblech, beispielsweise in seinen Randbereichen, rolliert, abgebogen oder abgekantet werden oder ähnliches. Der Rand- oder Flügelbereich kann dann in einem bestimmten Winkel von der vorherigen Erstreckungsebene und/oder von der Erstreckungsebene eines Befestigungsbereiches des Wärmeleitbleches abstehen. Insbesondere bei langen Elementen können die Wärmeleitbleche mit integrierten Flügeln derart bearbeitet sein, dass eine Reduktion der Versteifung erfolgt, beispielsweise durch das Vorsehen von Materialausnehmungen (in definierten Abständen), insbesondere in Form von (dünnen) Schlitzen.

Gemäß der Erfindung wird der Flügel von einem in Bezug auf das Wärmeleitblech gesonderten Element ausgebildet. Es kann sich hierbei beispielsweise um ein von dem Wärmeleitblech beabstandetes Element oder alternativ um ein Aufsatzelement handeln. Das Aufsatzelement kann am Wärmeleitblech befestigt, insbesondere an diesem verklebt, sein. Beide können vorzugsweise aus demselben Material bestehen.

Insbesondere können zur Herstellung des Aufsatzelementes und des Wärmeleitbleches identische Rohlinge verwendet werden. Typischerweise wird in beiden eine Sicke zur Aufnahme des Rohrsystemabschnittes eingearbeitet. Während das Wärmeleitblech im anderen Bereich flach bleiben kann (zur Befestigung oder Festlegung an einer Trägerplatte), können die Randbereiches des Aufsatzelements abgebogen werden (zur Herstellung der Flügel).

Das Aufsatzelement wird typischerweise im Bereich der Sicke an dem Wärmeleitblech befestigt (insbesondere auch an der Sicke). Alternativ oder zusätzlich kann das Aufsatzelement plane Auflagebereiche aufweisen, insbesondere falls es die Sicke nicht übergreift. Demnach kann das Aufsatzelement also lediglich den Bereich der Sicke des Wärmeleitbleches kontaktieren (und dort befestigt bzw. verklebt sein), oder nur einen (planen) Auflagebereich des Wärmeleitbleches (und dort befestigt bzw. verklebt sein), oder beide Bereiche (und jeweils dort befestigt bzw. verklebt sein).

Während eine Ausführung des (Aufsatz-)Elementes aus Aluminium oder (Edel-)Stahl bevorzugt wird, so sind in einigen Anwendungsfällen, insbesondere wenn es um kostengünstige Lösungen geht, auch Ausführungen des (Aufsatz-)Elements aus Kunststoff möglich.

Die Ausbildung des (Aufsatz-)Elements aus Kunststoff kann insbesondere in Fällen eingesetzt werden, in welchen es insbesondere um eine akustische Dämmung geht (so dass beispielsweise auf das Befüllen einer Kassette oder eines Segels mit dämmenden fadenartigen Materialien verzichtet werden kann).

Derartige Kunststoff-(Aufsatz-)Elemente sind besonders kostengünstig herzustellen.

Die Vorteile der voranstehenden Absätze gelten gleichermaßen auch für gesonderte Element, welche nicht als Aufsatzelement ausgebildet, sondern beabstandet vom Wärmeleitblech angeordnet, sind.

In diesem Falle ist das gesonderte Element gerade nicht als Aufsatzelement ausgebildet und kontaktiert oder beaufschlagt daher das Wärmeleitblech nicht. Insbesondere kann es parallel zum Wärmeleitblech angeordnet sein.

Es soll gemäß dieser bevorzugten Ausführung beabstandet vom Wärmeleitblech angeordnet sein, das heißt also im Wesentlichen, dass dieses es nicht berühren soll. Hierfür reicht allerdings auch ein minimaler Abstand.

Mithin stellt aber auch ein derartiges, separates Element, welches nicht als Aufsatzlement ausgebildet ist, erfindungsgemäß einen von der Montage- oder Befestigungsplatte abstehenden Flügel bereit.

Typischerweise ist das separate Element in diesem Fall direkt auf der Montage- oder Befestigungsplatte angeordnet, insbesondere dort verklebt.

Schließlich sei angemerkt, dass von der Erfindung auch derartige separate Elemente umfasst sind, welche teilweise als Aufsatzelement ausgebildet sind und nicht vollständig auf dem Wärmeleitblech aufsitzen, sondern dieses beispielsweise lediglich überlappen. In diesem Sinne kann ein derartiges, teilweises Aufsatzelement also Bereiche bereitstellen, welche das Wärmeleitblech kontaktieren bzw. auf diesem aufliegen und Bereiche, welche direkt auf der Montage- oder Befestigungsplatte aufliegen.

Gemäß einer besonders vorteilhaften Ausgestaltung der Erfindung weist der Flügel mindestens einen Diffusor auf. Typischerweise weist der Flügel eine Vielzahl von Diffusoren auf, welche insbesondere identisch ausgebildet und/oder ausgerichtet sind.

Ein derartiger Diffusor kann insbesondere einer turbulenten Luftführung dienen, für Fälle, in denen dies gewünscht ist.

Vorteilhafterweise weist der Diffusor (beziehungsweise weisen die Diffusoren) eine Durchtrittsöffnung im Flügel auf. Hierdurch kann die Luft aus den von den Flügeln gebildeten Kanälen gezielt herausgeführt werden.

In einem Ausführungsbeispiel wird der Diffusor von der Durchtrittsöffnung gebildet und besteht mit anderen Worten aus einem Loch im Flügel. Zu dessen Herstellung kann insbesondere Material (aus dem Flügel) entfernt werden.

Gemäß einer anderen vorteilhaften Ausgestaltung wird der Diffusor materialneutral gebildet, d. h. es wird kein Material entfernt.

Der Diffusor kann hierzu insbesondere mit einem Vorsprung aus der Ebene des Flügels hervorstehen. Denkbar sind Fälle, in welchen der Diffusor aus der Ebene herausgedrückt oder gezogen wird oder ähnliches. Es sollen von der Erfindung sowohl Fälle umfasst sein, bei welchen sich durch die Überführung in eine vorstehende Form keine Durchtrittsöffnungen im Flügel bilden, als auch solche, bei denen dies passiert.

Letzterer Fall ist besonders bevorzugt. Insbesondere können die Diffusoren hierbei kiemenartig ausgebildet sein, also beispielsweise nach Art eines Vorsprunges, durch dessen Herausarbeitung eine (im Wesentlichen identisch geformte) Durchtrittsöffnung entsteht.

Weist der Flügel entsprechende Vorsprünge auf, so ist es besonders vorteilhaft, wenn diese Vorsprünge (und damit auch die Diffusoren) eines Flügels eine gleiche Ausrichtung aufweisen.

Die Durchtrittsöffnungen der Flügel können sämtliche geeignete Formen aufweisen, wie rechteckige, eckige, runde, dreieckige, trapezförmige Formen oder ähnliches.

Gleiches gilt auch für die Vorsprünge. Sind Vorsprünge und Durchtrittsöffnungen vorgesehen, so sind die Vorsprünge, bezogen auf den ihnen zugeordneten Kanal, vorzugsweise derart ausgebildet, dass sie gegen die Strömungsrichtung der Luft hervorstehen, somit die Luft also besonders gut durch die Durchtrittsöffnungen leiten können. In anderen Ausführungsformen ist allerdings auch eine umgekehrte Anordnung vorteilhaft, in welcher die Vorsprünge in Strömungsrichtung hervorstehen oder gar quer zu dieser angeordnet sind.

Besonders vorteilhaft ist es, sofern die Vorsprünge einstückig stoffschlüssig mit dem Flügel ausgebildet sind, also im Wesentlichen aus diesem herausgearbeitet sind. Die Alternative, nämlich aus einem separaten Stück gefertigte Vorsprünge, welche an dem Flügel angeordnet werden, ist jedoch prinzipiell auch von der Erfindung umfasst.

Eine weitere Besonderheit der Erfindung betrifft die Idee, dass die erfindungsgemäßen Flügel eine Haltefläche für ein auf sie aufliegendes Dämmelement bereitstellen.

Die Flügel können dabei gemeinsam mit dem Dämmelement und der Montageplatte (und/oder einem Wärmeleitblech) einen Luftleitungskanal bereitstellen oder ausbilden.

Der Luftleitungskanal kann hierbei, wie der Name bereits erahnen lässt, zur Leitung von Luft unterhalb besagter Dämmplatte dienen.

Zur Halterung des Dämmelementes kann der Flügel insbesondere eine abknickende Kante aufweisen.

Die Erfindung betrifft des Weiteren ein System, welches mindestens einen ersten und zweiten Flächenwärmetauscher, insbesondere nach einem der beschriebenen Ansprüche, betrifft. Die Besonderheit besteht hierbei darin, dass der Flügel des ersten Flächenwärmetauschers einen anderen Anstellwinkel zur Montageplatte aufweist als der Flügel des zweiten Flächenwärmetauschers.

Mit anderen Worten wird ein System bereitgestellt, bei welchem, je nach Anwendungsfall, ein Flächenwärmetauscher mit unterschiedlichen Anstellwinkeln genutzt werden kann. Insbesondere kann beispielsweise je nach Bauhöhe der genutzten Kassette oder des Segels ein anderer Anstellwinkel vorteilhaft sein. Auch kann je nach Anwendungsfall (Luftleitung oder möglichst gute Wärmeübertragung oder möglichst gute Akustikdämmung) ein Flächenwärmetauscher mit einem anders angeordneten beziehungsweise ausgerichteten beziehungsweise einem anderen Anstellwinkel aufweisendem Flügel genutzt werden.

Das System erlaubt insbesondere die Bevorratung von Flächenwärmetauschern mit unterschiedlichen Anstellwinkeln (der Flügel).

Sämtliche Vorteile, welche in Bezug auf die erfindungsgemäßen Flächenwärmetauscher voranstehend beschrieben wurden, gelten selbstverständlich auch für das System.

Des Weiteren wird die der Erfindung zugrundeliegende Aufgabe durch Verfahren gemäß den Patentansprüchen 12 und 13 gelöst.

Diesbezüglich sei angemerkt, dass sämtliche in Verbindung mit den Vorrichtungs- beziehungsweise Systemansprüchen 1 bis 10 beschriebenen Merkmale und Vorteile selbstverständlich auch auf die Verfahrensansprüche 12 und 13 übertragbar sind und lediglich aus Gründen der Übersichtlichkeit an dieser Stelle nicht noch einmal explizit im Zusammenhang mit dem Verfahrensanspruch wiederholt werden (und anders herum). Dementsprechend soll beispielsweise ein Verfahren als offenbart gelten, bei welchem der Flügel Diffusoren aufweist usw.

Gleichsam soll ein Herstellungsverfahren als offenbart gelten, bei welchem die Flügel durch Rolieren, Prägen, Abbiegen und/oder Abkanten ausgebildet werden und/oder das Aufbringen (beziehungsweise die Befestigung) des Wärmeleitbleches und/oder des separaten (Aufsatz- )Elementes durch Aufkleben und/oder Löten und/oder Schweißen (insbesondere an der Montageplatte) erfolgt.

Weitere Vorteile und Ausgestaltung der Erfindung ergeben sich aufgrund der gegebenenfalls nicht zitierten Untersprüche sowie aufgrund der nun folgenden Figurenbeschreibung.

In den Figuren zeigen:
- Fig. 1: in einer sehr schematischen Schnittansicht einen an einer Gebäudedecke angeordneten Flächenwärmetauscher des Standes der Technik des Kassettentyps,
- Fig. 2: in einer schematischen Schnittansicht, unter Fortlassung wesentlicher Elemente, die Anordnung dreier Flächenwärmetauscher in einem Raum,
- Fig. 3: in einer sehr schematischen Aufsicht einen alternativen Flächenwärmetauscher mit zwei schematischen Rohrmäandern auf einer Trägerplatte, wobei die Flügelelemente aus Gründen der Perspektive nicht erkennbar sind,
- Fig. 4: in einer perspektivischen Ansicht ein Musterexemplar eines Flächenwärmetauschers mit einem ersten Ausführungsbeispiel an Flügeln, welche von einem Aufsatzelement gebildet werden, in einem sehr schematischen, teilweise abgebrochen dargestellten Zustand,
- Fig. 5: in einer perspektivischen, schematischen Ansicht ein Flügel-Aufsatzelement samt Wärmeleitblech gemäß Fig. 4, unter Fortlassung weiterer Bauelemente,
- Fig. 6: eine schematische Querschnittsansicht der Elemente gemäß Fig. 5,
- Fig. 7: ein nicht erfindungsgemäßes Ausführungsbeispiel einer Flügelausbildung, bei dem die Flügel integral von dem Wärmeleitblech ausgebildet werden,
- Fig. 8: eine schematische Querschnittsansicht der Elemente gemäß Fig. 7,
- Fig. 9: ein weiteres nicht erfindungsgemäßes Ausführungsbeispiel einer Flügelausbildung, welches im Wesentlichen der Ausführung gemäß Fig. 7 entspricht, allerdings unter einem anderen Anstellwinkel sowie mit aus Lochungen bestehenden Diffusoren,
- Fig. 10: ein Querschnittsansicht der Elemente gemäß Fig. 9,
- Fig. 11: ein weiteres Ausführungsbeispiel zur Ausbildung von Flügeln, welches etwa Fig. 5 entspricht, jedoch unter einem anderen, flacheren Anstellwinkel sowie unter Darstellung von Diffusoren mit Vorsprüngen,
- Fig. 12: eine schematische Schnittansicht der Elemente gemäß Fig. 11,
- Fig. 13: in einer Ansicht wie in Fig. 6 ein weiteres Ausführungsbeispiel mit zwei Flügelebenen,
- Fig. 14: in Ansichten etwa gemäß Fig. 8 (für Fig. 14a und 14b) welche nicht erfindungsgemäße Ausführungsformen zeigen, beziehungsweise Fig. 6 (für Fig. 14c und 14d), die weitere erfindungsgemäße Ausführungsformen, welche die Besonderheit einer Abknickkante im Flügel, insbesondere zur Ausbildung einer Auflagefläche, aufweisen,
- Fig. 15a: in einer perspektivischen, schematischen Ansicht ein Wärmeleitblech mit einem alternativen Flügel-Aufsatzelement,
- Fig. 15b: eine schematische Querschnittsansicht der Elemente gemäß Fig. 15a,
- Fig. 16a: in einer Ansicht etwa gemäß Fig. 15a, ein Wärmeleitblech mit zwei, beidseitig einer zentralen Sicke angeordneten Flügel-Aufsatzelementen, in einem anderen Winkel abstehend als gemäß Fig. 15a,
- Fig. 16b: eine schematische Querschnittsansicht der Elemente gemäß Fig. 16a,
- Fig. 17a: in einer perspektivischen Ansicht ein Teil eines erfindungsgemäßen Flächenwärmetauschers, mit einer Trägerplatte, darauf angeordneten Wärmeleitblechen und dazwischen angeordneten, separaten, von den Wärmeleitblechen beabstandeten Flügelelementen in exemplarisch unterschiedlichen Anstellwinkeln, und
- Fig. 17b: eine schematische Querschnittsansicht der Elemente gemäß Fig. 17a.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophs. In den der Figurenbeschreibung nachfolgenden Patentansprüchen werden die in den Figuren und der Figurenbeschreibung verwendeten Bezugszeichen der Einfachheit halber gegebenenfalls ohne Apostrophs oder Kleinbuchstaben verwendet, sofern die entsprechenden Gegenstände vergleichbar sind.

Ausführungsbeispiele der Erfindung sind in der nachfolgenden Figurenbeschreibung, auch unter Bezugnahme auf die Zeichnungen, beispielhaft beschrieben.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

In den Figuren 2 bis 17 sind teilweise erfindungsgemäße Flächenwärmetauscher 10 bzw. deren Bestandteile in verschiedenen (Abschnitts-)Ansichten und Ausführungsformen dargestellt.

Erfindungsgemäße Flächenwärmetauscher werden dabei ausweislich Fig. 2 beispielsweise im Bereich der Decke 15 eines Gebäuderaums 16 angebracht, um den Raum 16 deckenseitig zu klimatisieren. Die Klimatisierung kann dabei insbesondere einem Heizen oder auch alternativ einem Kühlen dienen. Insbesondere aus optischen Gründen werden für derartige Anforderungen oftmals Flächenwärmetauscher des Kassettentyps eingesetzt, bei welchen die eigentlichen Funktionsbauteile des Flächenwärmetauschers 10, wie Trägerplatte oder Rohrsystem, in einer Haltekassette 12 angeordnet sind. Fig. 2 zeigt hierbei ein Flächenwärmetauschersystem, bestehend aus drei Flächenwärmetauschern 10a, 10b, 10c, deren Haltekassetten im Wesentlichen nebeneinander angeordnet sind.

Aus Gründen der Übersichtlichkeit ist beispielsweise das Rohrsystem nicht dargestellt. Die Rohre aller drei Wärmetauscher 10a, 10b, 10c können aber beispielsweise einem gemeinsamen Zufluss und/oder Abfluss zugeordnet sein.

Eine derartige Anordnung von Flächenwärmetauschern 10 an einer Decke ist grundsätzlich bekannt, weshalb es sich bei einem oder mehreren der in Fig. 2 dargestellten Flächenwärmetauschern grundsätzlich auch um einen Flächenwärmetauscher des Standes der Technik gemäß Fig. 1 handeln könnte, so dass der in Fig. 2 eingekreiste Bereich mit dem Bezugszeichen I versehen ist.

Mit anderen Worten besteht die Idee des neuartigen Flächenwärmetauschers nicht in der Anordnung sondern vielmehr in einem neuartigen Aufbau des Flächenwärmetauschers 10.

Zu Fig. 2 sei noch angemerkt, dass diese schematische Darstellung neben den Bauelementen des Flächenwärmetausches beispielsweise auch Luftauslässe - oder entsprechende Ausgabedüsen - nicht darstellt, welche im Bereich der Kassette 12 angeordnet sein können.

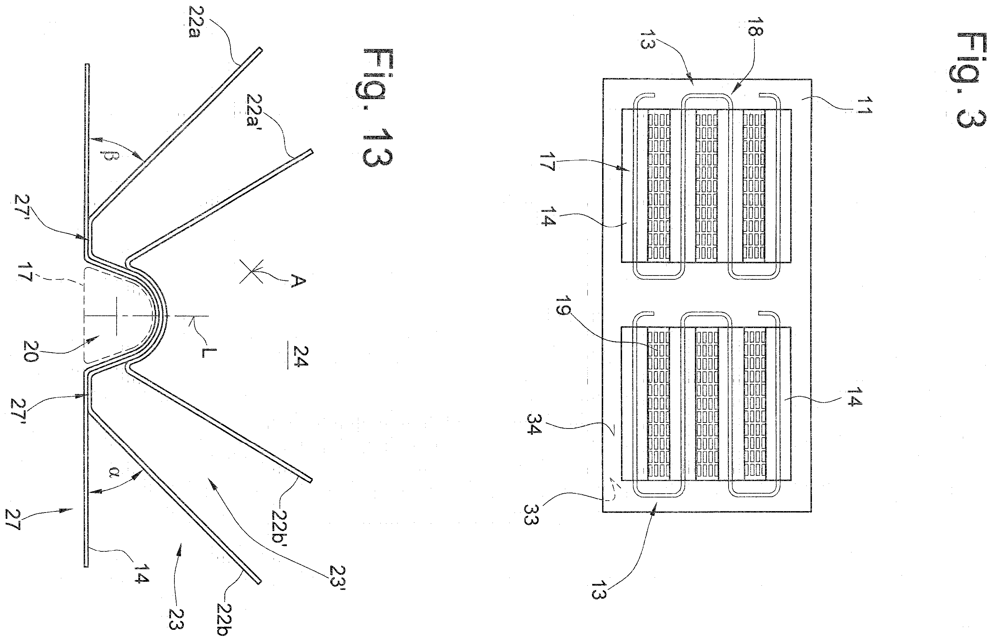

Eine Aufsicht, auf die in Fig. 2 nicht dargestellten Elemente, zeigt Fig. 3, gemäß welcher zwar die Trägerplatte 11 dargestellt ist, nicht jedoch die entsprechende Haltekassette 12. Die Trägerplatte 11, wie sie in Fig. 3 dargestellt ist, kann insbesondere in ein Segel oder eine Haltekassette 12 eingelegt und/oder dort verklebt werden.

Fig. 3 lässt insbesondere das mäanderförmige Rohrsystem 13 erkennen, von welchem in Fig. 3 beispielhaft zwei dargestellt sind, auch um zu verdeutlichen, dass eine Trägerplatte 11 (oder Haltekassette 12) mehrere Rohrsysteme aufweisen kann. Nicht dargestellt ist, dass diese Rohrsysteme typischerweise miteinander verbunden beziehungsweise gekoppelt werden und ihnen jeweils ein gemeinsamer Wasserein- und auslass zugeordnet ist.

Ein typisches Rohrsystem 13 weist hierbei im Wesentlichen gerade Abschnitte 17 sowie kurvenartige oder gebogene Abschnitte 18 auf (wobei die kurven- oder bogenartigen Abschnitte 18 in sich selber auch noch kurze gestreckte Abschnitte aufweisen können, welche im Sinne der vorliegenden Erfindung aber nicht als gerade Abschnitte gemeint sein sollen), welche insbesondere eine Umlenkung um 180° bereitstellen.

Die geraden Abschnitte 17 des Rohrsystems 13 werden ausweislich Fig. 3 jeweils von einem sogenannten Wärmeleitblech 14 übergriffen, beziehungsweise gesichert, welches das Rohrsystem 13 an der Trägerplatte 11 festlegt.

Dem Wärmeleitblech 14 ist dabei erfindungsgemäß ein Flügelelement zugeordnet, welches in der Aufsicht gemäß Fig. 3 aber aus perspektivischen Gründen nicht dargestellt beziehungsweise nicht ersichtlich ist. Dieses wird anschließend im Detail beschrieben.

Zu Fig. 3 sei jedoch abschließend noch angemerkt, dass die Trägerplatte 11 in diesem Ausführungsbeispiel die Montageplatte darstellt. Beispielsweise könnte die Trägerplatte 11, beziehungsweise das in Fig. 3 dargestellte Zwischenprodukt, so wie dargestellt an eine Baustelle verbracht werden und dort in eine Haltekassette eingeklebt werden. Alternativ kann dies auch werksseitig geschehen. In diesem Fall könnte auch die plane Fläche einer Haltekassette oder eines Segels als Montageplatte bezeichnet werden.

Auch zeigt Fig. 3 typische Öffnungen 19 in der Trägerplatte 11 zur Verbesserung einer Klimatisierung und gegebenenfalls auch akustischen Verbesserung, welche typischerweise zwischen den geraden Abschnitten 17 des Rohrsystems 13 angeordnet sind.

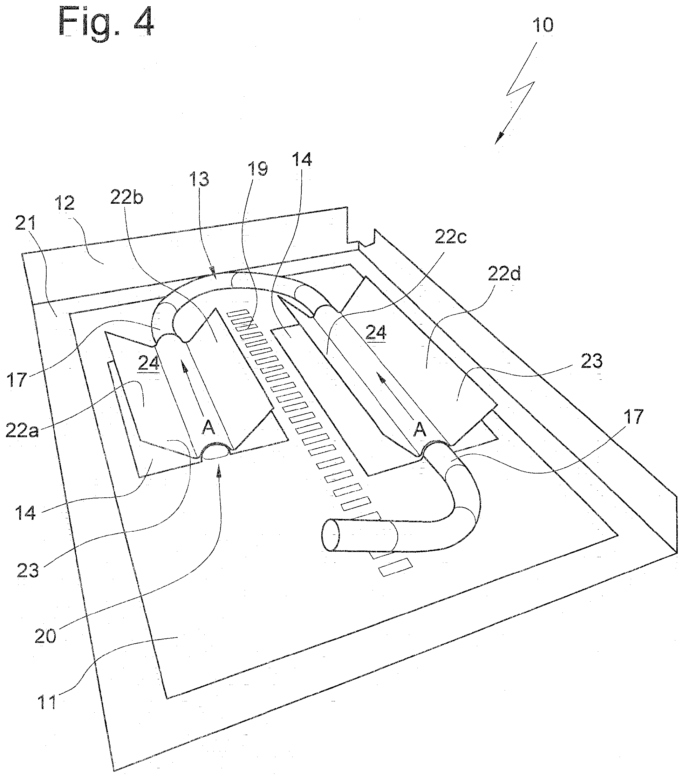

Zur Verdeutlichung der eigentlichen Erfindung zeigt Fig. 4 dann in einer perspektivischen Ansicht den erfindungsgemäßen Flächenwärmetauscher 10 in einer teilweise abgebrochenen (Muster-)Darstellung. So sind beispielsweise lediglich zwei gerade Abschnitte 17 eines Rohrsystems 13 angedeutet. Diese geraden Abschnitte 17 sind jeweils mit Hilfe eines Wärmeleitbleches 14 auf einer Trägerplatte 11 befestigt. Hierzu weist das Wärmeleitblech 14 zentral eine Sicke 20 auf, welche das Rohrsystem 13 beziehungsweise einen geraden Abschnitt 17 dessen übergreift.

In dem in Fig. 4 gezeigten Ausführungsbeispiel lässt sich erkennen, dass das Rohrsystem insbesondere in dem Bereich seiner geraden Abschnitte 17 einen im Wesentlichen D-förmigen Querschnitt aufweist, welcher besonders gut zum Anliegen an der Trägerplatte 11 geeignet ist.

Die Trägerplatte 11 selbst weist, ähnlich wie in Fig. 3 dargestellt, zwischen den Wärmeleitflächen 14 eine Lochung beziehungsweise Öffnungen 19 auf und ist in eine Haltekassette 12 eingelegt, welche aus Gründen der Übersichtlichkeit lediglich teilweise dargestellt ist. Die Haltekassette 12 weist dabei eine Haltefläche 21 auf, auf welcher die Trägerplatte 11 plan aufliegt und dort beispielsweise verklebt ist.

Erfindungsgemäß sind dem Rohrsystem 13 beziehungsweise dessen geraden Abschnitten 17 auch Flügel 22 zugeordnet.

Die Flügel 22 werden in dem Ausführungsbeispiel gemäß Fig. 4 von separaten Aufsatzelementen 23 bereitgestellt, welche im Bereich der Sicke 20 des Wärmeleitbleches 14 auf diesem aufsitzen und dort beispielsweise verklebt sind. Hierzu können die Aufsatzelemente ebenfalls Sicken aufweisen, welche nahezu identisch zu den Sicken 20 des Wärmeleitbleches ausgebildet sind, aber gegebenenfalls einen geringfügig größeren Radius aufweisen.

Fig. 4 lässt auch erkennen, dass diese Aufsatzelemente 23 im Wesentlichen aus identischen Rohlingen ausgebildet sind wie die Wärmeleitbleche 14. Demnach können sie insbesondere aus demselben Material bestehen, beispielsweise aus Aluminium (oder alternativ Stahl).

In Fig. 4 bestehen sowohl das Wärmeleitblech 14 als auch das Aufsatzelement 23 beispielsweise aus Blankaluminium. Es kann in anderen Ausführungsbeispielen aber auch beispielsweise lackiertes Aluminium (zum Beispiel schwarz lackiertes) verwenden werden.

Den geraden Abschnitten 17 beziehungsweise jedem Wärmeleitblech 14 sind insbesondere jeweils genau zwei Flügel zugeordnet (Paare 22a und 22b sowie 22c und 22d). Diese Paare 22a, 22b sowie 22c und 22d bilden hierbei jeweils einen Luftkanal 24 oberhalb des geraden Abschnittes 17 des Rohrsystems 13 beziehungsweise oberhalb des Wärmeleitbleches 14 aus. Der Kanal 24 erstreckt sich, wie auch die Flügel 22, im Wesentlichen in Axialrichtung A des Rohrsystems beziehungsweise der Wärmeleitbleche 14.

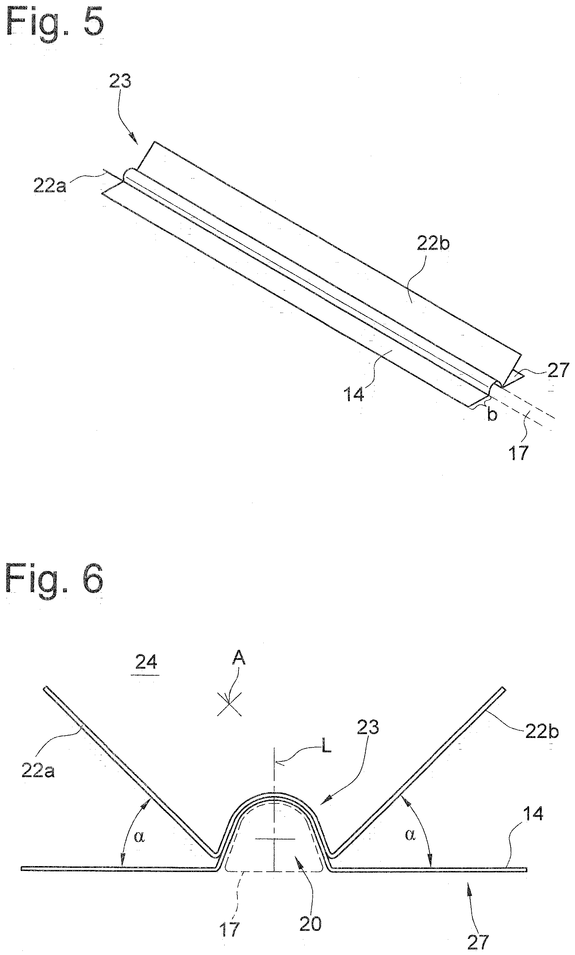

Fig. 5 zeigt dann ein entsprechendes Wärmeleitblech 14 sowie Aufsatzelement 23, gemäß Fig. 4, jedoch in Alleinstellung mit gestrichelt angedeutetem Rohrsystem 13 beziehungsweise geradem Abschnitt 17. Dies soll auch verdeutlichen, dass Fig. 4 lediglich einen beispielhaften Ausschnitt eines Flächenwärmetauschers 10 mit zwei exemplarischen geraden Abschnitten 17 darstellt. Es kann sich in der Praxis aber selbstverständlich auch um viel mehr gerade Abschnitte handeln.

Fig. 6 zeigt dann eine Querschnittsansicht der Fig. 5 mit gestrichelt angedeutetem, im Querschnitt D-förmigem Abschnitt 17 des Rohrsystems 13. Hier zeigt sich insbesondere, dass das Aufsatzelement 23 im Bereich der Sicke 20 eng auf dem Wärmeleitblech 14 aufsitzt und die Flügel 22 des Aufsatzelementes 23 in einem, insbesondere identischen, Winkel α von dem Wärmeleitblech 14 (und somit auch von der nicht dargestellten Montageplatte) abstehen. Bei dem Winkel α handelt es sich typischerweise um einen Winkel von zwischen 0° und 90°, beispielsweise von zwischen 30° und 60°, vorzugsweise von zwischen 40° und 50°, insbesondere von etwa 45°. In anderen, nicht dargestellten Ausführungsbeispielen können die beiden mit α bezeichneten Winkel aber auch unterschiedlich groß ausgebildet sein (vgl. hierzu Ausführungen zu Fig. 13).

Fig. 6 lässt somit einen im Wesentlichen achsensymmetrischen Querschnitt zur Längsachse L erkennen, bei unterschiedlichen Winkeln α wäre der Querschnitt natürlich asymmetrisch.

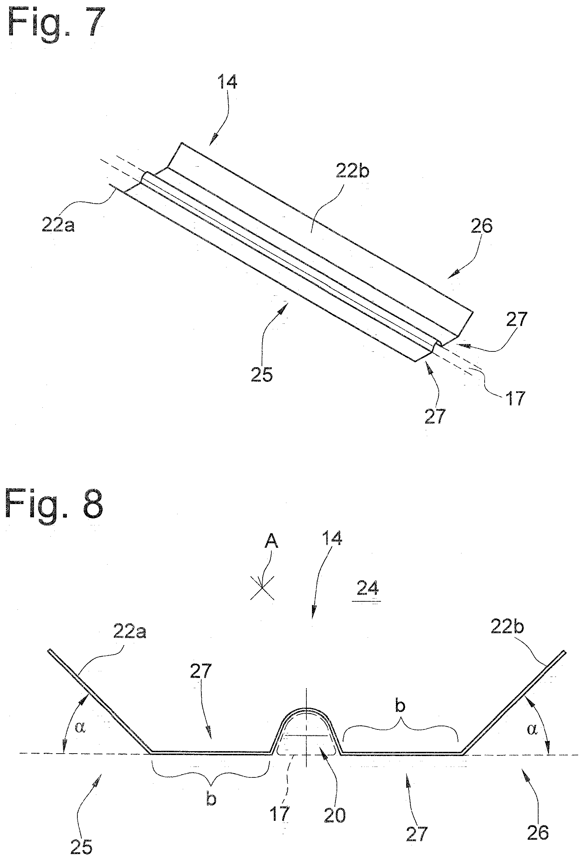

Ein alternatives, jedoch nicht erfindungsgemäßes Ausführungsbeispiel zu demjenigen gemäß den Fig. 5 und 6 zeigen die Fig. 7 und 8 in vergleichbaren Ansichten.

Der wesentliche Unterschied zu dem zuvor beschriebenen besteht in dem Ausführungsbeispiel darin, dass die Flügel 22a, 22b nicht von einem separaten Aufsatzelement bereitgestellt werden, sondern von dem Wärmeleitblech 14 selber ausgebildet werden.

Das Wärmeleitblech 14 ist daher, im Gegensatz zu demjenigen aus dem Bespiel gemäß den Fig. 5 und 6, nicht beidseitig der Sicke 20 durchgehend flach ausgebildet, sondern knickt in seinen Randbereichen 25 und 26 ab, um besagte Flügel 22 auszubilden. Die Flügel 22, welche in diesem Ausführungsbeispiel Bestandteil des Wärmeleitbleches 14 sind, bilden einen Anstellwinkel α aus (der in dem Ausführungsbeispiel gemäß den Fig. 7 und 8 demjenigen gemäß den Fig. 5 und 6 entspricht, also etwa 45°). In diesem Ausführungsbeispiel wird der Winkel allerdings nicht relativ zum Wärmeleitblech ausgebildet, sondern relativ zu einer in Fig. 8 nicht dargestellten Montageplatte, welche beispielweise von der Trägerplatte oder der Halteplatte einer Haltekassette oder eines Segels bereitgestellt werden kann (in Fig. 8 ist die entsprechende Ebene gestrichelt angedeutet).

Insbesondere die Querschnittsansicht gemäß Fig. 8 verdeutlicht, dass bei diesem nicht erfindungsgemäßen Ausführungsbeispiel die Flügel 22 nicht direkt an eine Sicke anschließen, sondern das Wärmeleitblech 14 zwischen den Flügeln 22 und der Sicke 20 ebene Haltebereiche 27 ausbildet, welche ihrer Breite b nach beispielsweise etwa den Haltebereichen 27 gemäß dem Ausführungsbeispiel nach den Fig. 5 und 6 entsprechen oder auch etwas schmaler ausfallen können (wobei diese Bereiche 27 gemäß dem Ausführungsbeispiel nach Fig. 7 und 8 dann in die Flügel 22 übergehen, während dies beim Ausführungsbeispiel gemäß den Fig. 5 und 6 gerade nicht der Fall ist).

Zu Fig. 7 und 8 sei an dieser Stelle angemerkt, dass die Wärmeleitbleche 14 auch in diesem Fall beispielsweise aus Aluminium bestehen können, insbesondere aus schwarz lackiertem Aluminium, was die Wärmeleitfähigkeit noch verbessern kann.

Grundsätzlich können aber auch die Wärmeleitbleche (und/oder Aufsatzelemente) der anderen Ausführungsbeispiele aus lackiertem Aluminium bestehen oder aus Blankaluminium, insbesondere auch das vorliegende Ausführungsbeispiel.

Auch könnten an der Unterseite des Wärmeleitblechs beispielsweise doppelseitige Klebebänder vorgesehen sein, um diese auf einer Montageplatte vorteilhaft zu befestigen. Für die Wärmeleitbleche der anderen Ausführungsbeispiele gilt dies ebenfalls, gegebenenfalls sogar für die Aufsatzelemente.

Alternativ können die Flügel anders, zum Beispiel durch Löten, Schweißen, Kleben oder ähnliches, mit dem Rohr und/oder dem Wärmeleitbleich (fest) verbunden werden.

Des Weiteren soll zu den Ausführungsbeispielen gemäß den Fig. 5 bis 8 angemerkt werden, dass der insbesondere in den Fig. 6 und 8 gestrichelt dargestellte, gerade Abschnitt 17 im Querschnitt eine D-Form aufweist. Grundsätzlich könnte dieser selbstverständlich aber auch eine kreisrunde Querschnittsform aufweisen, wie in Fig. 1 dargestellt, oder eine dreieckige oder ähnliches.

Beide Ausführungsbeispiele bilden zwischen ihren Flügen ausweislich der Fig. 6 und 8 jeweils einen Luftkanal 24 aus.

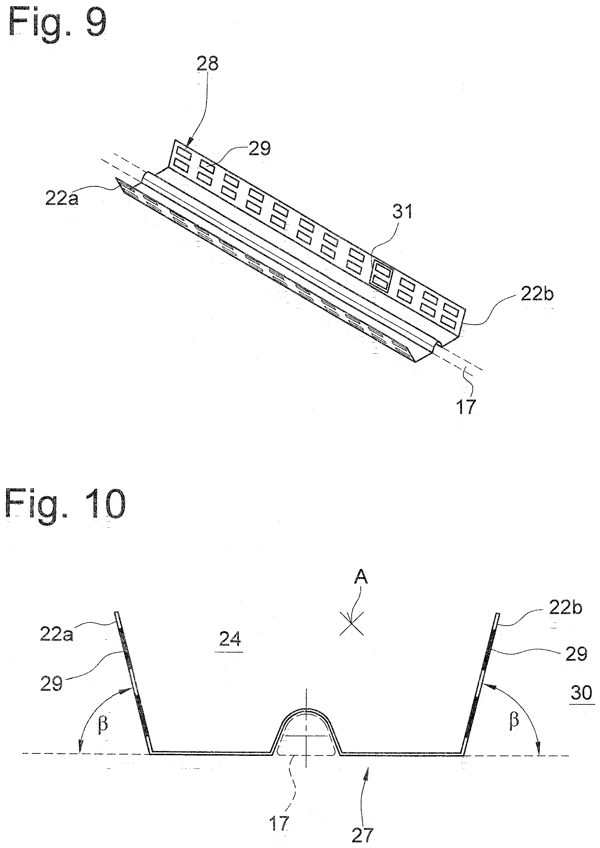

Ein weiteres nicht erfindungsgemäßes Ausführungsbeispiel, welches in wesentlichen Elementen demjenigen gemäß den Fig. 7 und 8 entspricht (auf dessen Ausführungen an dieser Stelle verwiesen sein soll), zeigen die Fig. 9 und 10 in zu den Fig. 7 und 8 identischen Ansichten.

Es bestehen jedoch zwei wesentliche Unterschiede zwischen den Ausführungsbeispielen gemäß den Fig. 7 und 8 auf der einen Seite und dem Ausführungsbeispiel gemäß Fig. 9 und 10 auf der anderen Seite:
So ist zunächst festzustellen, dass das Ausführungsbeispiel gemäß den Fig. 9 und 10 steiler abstehende beziehungsweise anstehende Flügel 22a und 22b aufweist, welche somit einen größeren Anstellwinkel β ausbilden. Dieser Winkel β liegt zwar auch im Bereich von zwischen 0° und 90°, übersteigt aber einen Winkel von 45° und kann beispielsweise im Bereich von zwischen 45° und 90° liegen.

In speziellen Anwendungsfällen können die Winkel aber auch größer als 90° sein, insbesondere zur Luftführung.

Dies soll verdeutlichen, dass der Anstellwinkel der Flügel, je nach Einsatzfall, variabel ausgebildet werden kann.

Der zweite, möglicherweise noch wesentlichere Unterschied ist besonders gut in Fig. 9 zu erkennen, und besteht darin, dass die Flügel 22 mit Diffusoren 28 versehen sind. In diesem Ausführungsbeispiel bestehen die Diffusoren 28 lediglich aus Durchtrittsöffnungen oder Lochungen 29 in den Flügeln 22. In diesem Ausführungsbeispiel weisen diese Öffnungen 29 exemplarisch eine rechteckige Form auf, können aber auch jede andere geeignete Form ausbilden.

Auffällig ist in diesem Ausführungsbeispiel auch, dass die Diffusoren 28 sämtlich identisch orientiert und ausgerichtet sind (dies muss aber natürlich, je nach Anwendungsfall, nicht zwingend der Fall sein).

Die Diffusoren 28 ermöglichen eine turbulentere Luftführung im Kanal 24. Insbesondere kann die Luft aus dem Kanal 24 durch eine derartige Lochung 29 an die Außenseite 30 der Flügel 22 gelangen (wo der entsprechende Flügel mit einem entsprechenden Gegenflügel eines anderen Wärmeleitbleches 14 dann einen separaten Kanal bilden kann).

Zu dem Ausführungsbeispiel sei noch angemerkt, dass die Lochung natürlich sehr viel größer ausfallen kann. Ein alternatives Fenster ist in Fig. 9 lediglich exemplarisch mit 31 bezeichnet und umfasst im Wesentlichen den Rahmen zweier Lochungen, ist also mehr als doppelt so groß wie die sonstige Lochung gemäß Fig. 9.

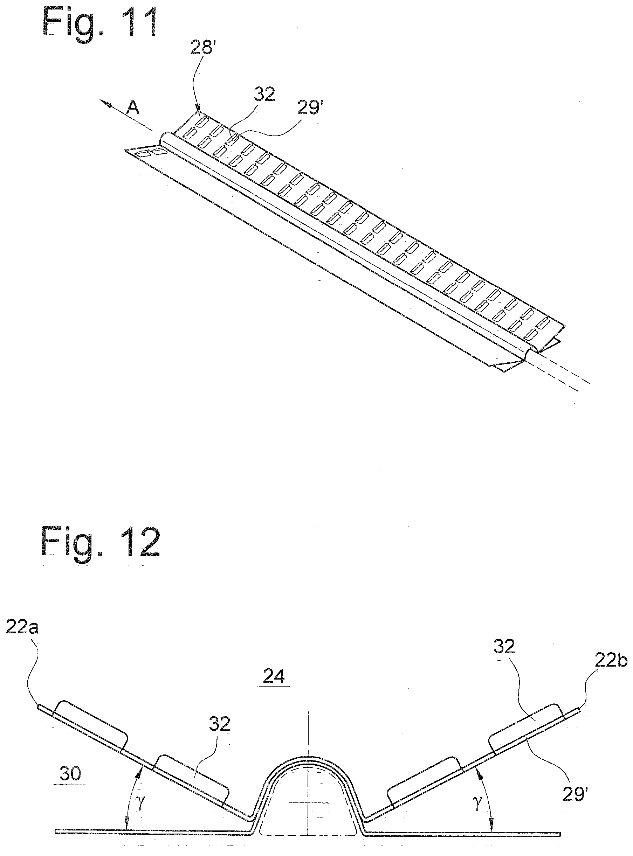

Ein weiteres Ausführungsbeispiel zeigen die Fig. 11 und 12. Das Ausführungsbeispiel entspricht im Wesentlichen demjenigen gemäß den Fig. 5 und 6 (auf dessen Ausführungen Bezug genommen wird).

Auch in diesem Ausführungsbeispiel bestehen wieder zwei wichtige Unterschiede:
So ist erstens anzumerken, dass der Anstellwinkel γ der Flügel 22 in diesem Ausführungsbeispiel geringer ist als derjenige in den Ausführungsbeispielen gemäß den Fig. 5 bis 8. Der Winkel γ beträgt zwar ebenfalls zwischen 0° und 90°, ist in diesem Ausführungsbeispiel aber kleiner als 45°, und beträgt somit zwischen 0° und 45°. Auch dies soll verdeutlichen, dass der Anstellwinkel, je nach Anwendungsfall, anders ausfallen kann.

Der zweite Unterschied (im Gegensatz zu den Fig. 5 und 6) besteht auch in diesem Ausführungsbeispiel darin, dass in den Flügeln 22 Diffusoren 28' vorgesehen sind.

Die Diffusoren 28' gemäß Fig. 11 und 12 unterscheiden sich von den Diffusoren 28 gemäß dem Ausführungsbeispiel nach Fig. 9 und 10 im Wesentlichen dadurch, dass der Diffusor 28' zusätzlich zu einer Ausnehmung 29' auch noch einen (Material-)Vorsprung 32 umfasst.

Der Diffusor 28' ist somit im Wesentlichen kiemenartig ausgebildet und der Vorsprung kiemenklappenartig.

Mit anderen Worten besteht der Unterschied zwischen dem Diffusor 28' und dem Diffusor 28 darin, dass der Diffusor 28' materialneutral ausgebildet ist, während der Diffusor 28 (im Vergleich zum Ursprungszustand des Flügels 22, aber auch zum Diffusor 28') weniger Material aufweist (dieses wurde für die Ausnehmung oder Lochung 29 beispielsweise herausgestanzt oder ähnliches).

In diesem Sinne kann der Vorsprung 32 im Wesentlichen etwa die gleiche Form haben wie die Ausnehmung 29', da die Herausarbeitung des Vorsprungs 32 aus dem Flügel 22 gerade durch ein Heraustreten aus der Materialebene des Flügels 22, unter Bildung der Ausnehmung 29', erfolgt.

In dem in den Fig. 11 und 12 dargestellten Ausführungsbeispiel besteht eine weitere Besonderheit darin, dass der Vorsprung 32 entgegen der Axialrichtung A (und somit der Strömungsrichtung der gegebenenfalls zu leitenden Luft) hervorsteht. Auf diese Weise kann die in Axialrichtung A strömende Luft besonders gut durch die Ausnehmungen oder Lochungen 29' geleitet werden und somit aus dem Bereich der Luftkanals 24 heraus an die Außenseite 30.

In einem anderen, nicht dargestellten Ausführungsbeispiel könnten die Vorsprünge aber auch um 180° gespiegelt angeordnet werden, also mit der Strömungsrichtung hervorstehen, was beispielsweise eine turbulente Luftführung innerhalb des Kanals 24 verbessern könnte.

An dieser Stelle sei angefügt, dass obwohl nicht dargestellt, natürlich auch Diffusoren vorstellbar sind, die überhaupt keine Ausnehmungen oder Lochungen aufweisen und nur aus Vorsprüngen (ohne Lochungen) bestehen.

Auch die Form der Lochungen und/oder Vorsprünge kann beliebig sein, beispielsweise dreieckig, trapezförmig, rechteckig etc.

Schließlich kann auch die Anordnung und Ausrichtung der Vorsprünge und/oder Lochung, je nach Anwendungsfall, beliebig sein, beispielsweise auch diagonal oder ähnliches.

Zusammenfassend sei zu sämtlichen erfindungsgemäßen Ausführungsbeispielen angemerkt, dass diese jeweils erfindungsgemäße Flügel aufweisen. Diese Flügel verbessern gemäß einem ersten Aspekt insbesondere die Wärmeleitfähigkeit des Flächenwärmetauschers, da bei einem derartigen Flächenwärmetauscher das sogenannte "Bottle-Neck" (also die Schmalstelle bei der Wärmeübertragung) tatsächlich nicht das eigentliche Rohrsystem ist, sondern vielmehr die Abgabefläche. Mit anderen Worten kann durch ein entsprechendes Rohr mehr Wärme transportiert werden als in der geeigneten Zeit von dem entsprechenden Bereich tatsächlich abgegeben werden kann (beziehungsweise aufgenommen werden kann). Die vorliegenden Flügelelemente ermöglichen in diesem Sinne also eine Vergrößerung der Wärmeleitfläche und damit eine Verbesserung dieses Verhältnisses.

Ein zweiter Aspekt dieser Flügel betrifft dann, wie bereits beschrieben, eine Verbesserung der Luftlenkung, insbesondere sofern im Bereich des Flächenwärmetauschers Luftaustrittsdüsen vorgesehen sind. Die Flügel können insbesondere Luftkanäle ausbilden, um die Luft so zu lenken beziehungsweise zu führen. Je nach Anwendungsfall kann auch eine turbulente Luftführung gewünscht sein, wozu dann Diffusoren vorgesehen werden.

Ein letzter Aspekt betrifft die akustische Dämmung des Flächenwärmetauschers. Sind nämlich erfindungsgemäße Flügel vorgesehen, so kann gegebenenfalls der Einsatz von akustischem Dämmmaterial im Flächenwärmetauscher, insbesondere oberhalb des Rohrsystems, vermindert werden oder auf dessen Einsatz ganz verzichtet werden. Die Flügel können nämlich insbesondere für eine Art Akustikbrechung sorgen.

Diesbezüglich sei auch angemerkt, dass für diesen Einsatzzweck Flügel aus Kunststoff gegebenenfalls hinreichend sein können. Auch wenn dies in den Ausführungsbeispielen nicht explizit dargestellt ist, so könnte beispielsweise ein Aufsatzelement 23, wie es in dem Ausführungsbeispiel gemäß den Fig. 5 und 6 dargestellt ist, durchaus aus Kunststoff bestehen. Dies wird vor allem in Anwendungsfällen sinnvoll sein, in welchen es nicht unbedingt darum geht, die Wärmeleitfähigkeit zu verbessern, sondern eher darum, die Akustik zu beeinflussen.

Ein weiteres Ausführungsbeispiel zeigt Fig. 13 (wobei hier lediglich die Querschnittsansicht dargestellt ist). Fig. 13 zeigt eine Ausführungsform, welche im Wesentlichen derjenigen der Fig. 5 und 6 entspricht, wobei zusätzlich zu dem ersten Aufsatzelement 23 ein zweites Aufsatzelement 23' vorgesehen ist. Dieses zweite Aufsatzelement 23' ist exemplarisch auf das erste Aufsatzelement 23 aufgesetzt und dort, beispielsweise im Bereicht der Sicke 20, an diesem befestigt. Es bildet dabei Flügelelemente 22a' und 22b' aus, welche achsensymmetrisch oder asymmetrisch anstehen können. Insbesondere können die Flügel 22a' und 22b' in anderen Winkeln anstehen als die Flügel 22a beziehungsweise 22b.

Fig. 13 zeigt eine weitere Besonderheit, welche nicht nur für den Fall zweier Aufsatzelemente als offenbart gelten soll: So weist das erste Aufsatzelement 23 (zwei) plane Anlagebereiche 27' auf, was verdeutlichen soll, dass die Befestigung eines Aufsatzelementes nicht über die Sicke erfolgen muss, sondern auch über entsprechende Auflagebereiche (wie sie beispielsweise aus Fig. 8 auch von Wärmeleitblechen selber bekannt sind) möglich ist.

Ohnehin sei zu Fig. 13 angemerkt, dass die dargestellte Ausbildung mit zwei (oder mehr) im Wesentlichen übereinander angeordneten Flügeln (22a und 22a', beziehungsweise 22b und 22b') nicht nur für die Fassung als offenbart gelten soll, in der das Wärmeleitblech keine Flügel aufweist. Vielmehr soll diese Idee (von mehreren im Wesentlichen übereinander angeordneten Flügeln) auch für die Ausführungen als offenbart gelten, bei welchen das Wärmeleitblech selber mindestens einen Flügel ausbildet.

Schließlich sei auch darauf hingewiesen, dass in Fig. 13 die Winkel α und β voneinander abweichen. Mit anderen Worten ist das Aufsatzelement 23 nicht achsensymmetrisch ausgebildet. Dies soll lediglich exemplarisch in Bezug auf Fig. 13 gezeigt sein. Dem Grunde nach ist eine derartige Ausführung aber auch auf sämtliche andere Ausführungsbeispiele übertragbar (und dort bereits teilweise textlich angedeutet).

Im Ausführungsbeispiel gemäß Fig. 13 sind also zusammenfassend vier Flügel offenbart. Gleichfalls können selbstverständlich mehr Flügel (beispielsweise 6 oder 8 oder noch mehr) an einem Rohrabschnitt angeordnet sein.

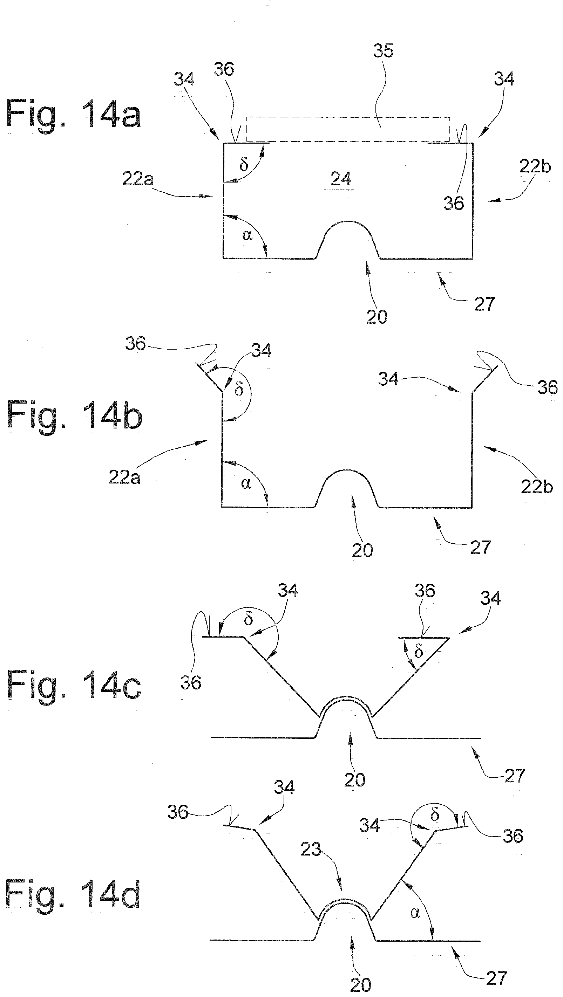

Als letztes wird auf die Fig. 14a bis 14d verwiesen: So stellen die Fig. 14a und 14b Ansichten nicht erfindungsgemäßer Ausführungsbeispiele etwa gemäß Fig. 8 dar. Der Unterschied im Vergleich zu Fig. 8 besteht hierbei jedoch im Wesentlichen darin, dass die Flügel 22 jeweils eine abknickende Kante 34 im Flügel 22 aufweisen, so dass der Flügel 22 insgesamt eine Haltefläche für ein lediglich in Fig. 14a angedeutetes Dämmelement 35 aufweist. Die Haltefläche wird dabei von Halteabschnitten 36 des jeweiligen Flügels 22 bereitgestellt, welche von dem Teil des Flügels 22 ausgebildet werden, welche sich jenseits (beziehungsweise außerhalb) der abknickenden Kante 34 oder Falz befinden.

Es ist ersichtlich, dass in einem derartigen Ausführungsbeispiel der von den Flügelelementen 22 ausgebildete (Luft-)Kanal von dem Dämmelement 35 nach oben hin begrenzt werden kann. Dies kann ein weiterer, zusätzlicher, positiver Effekt einer derartigen Ausführungsform mit Haltefläche für ein Dämmelement sein.

In Fig. 14a beträgt der Anstellwinkel α dabei beispielsweise etwa 90° (dies kann übrigens für sämtliche Ausführungsbeispiele der Anmeldung gelten) und der Abknickwinkel δ ebenfalls.

Fig. 14b zeigt dann, dass der Anstellwinkel α und der Abknickwinkel δ nicht übereinstimmen müssen. Insbesondere kann der Abknickwinkel δ größer als 90°, weiter vorteilhafterweise sogar größer als 180° sein. Es soll jedoch festgehalten werden, dass die Idee abknickender Kanten natürlich nicht nur bei einem Winkel α von 90° vorgesehen werden kann.

Dies verdeutlichen insbesondere die Fig. 14c und 14d.

Die Fig. 14c und 14d entsprechen dabei im Wesentlichen einer Ansicht etwa gemäß Fig. 6, bestehen also im Gegensatz zu den Fig. 14a und 14b nicht aus einem Wärmeleitblech mit integrierten Flügeln, sondern aus einem Wärmeleitblech 27 auf welchem ein Aufsatzelement 23 vorgesehen ist. Auch in diesen beiden Ausführungsbeispielen sind jedoch abknickende Kanten 34 zur Ausbildung von Auflageflächen vorgesehen.

Fig. 14c verdeutlicht hierbei insbesondere, dass die Abknickwinkel δ bei einem Ausführungsbeispiel durchaus nicht identisch sein müssen.

Abschließend sei zu Fig. 14 angemerkt, dass die Haltefläche zur Halterung des Dämmmaterials 35 natürlich nicht lediglich aus waagerechten Halteabschnitten 36 bestehen muss, wie in Fig. 14a und 14c dargestellt. Vielmehr können die Abschnitte 36 (wie beispielsweise in Fig. 14b und 14d) - je nach Form des Dämmmaterials - auch andere Orientierungen aufweisen.

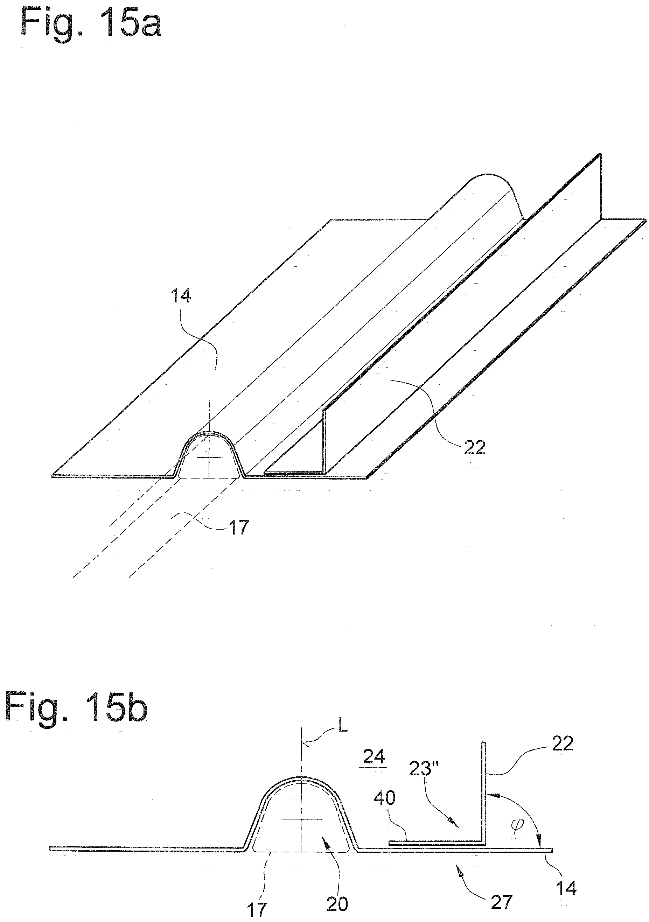

Ein weiteres, erfindungsgemäßes Ausführungsbeispiel zeigen die Figuren 15a und 15b.

Die Ansichten der Fig. 15a und 15b sind dabei grob mit den Ansichten beispielsweise der Fig. 5 und 6 vergleichbar. Insbesondere zeigt Fig. 15a unter gestrichelter Andeutung eines geraden Rohrabschnittes 17 ein diesen übergreifendes Wärmeleitblech 14 und einen daran angeordneten Flügel 22. Dieser Flügel 22 wird ausweislich Fig. 15b in diesem Ausführungsbeispiel von einem separaten Aufsatzelement 23" bereitgestellt. Im Unterschied zu Fig. 6 ist das Aufsatzelement 23" in diesem Ausführungsbeispiel jedoch nicht derart ausgebildet, dass es die Sicke 20 des Wärmeleitbleches 14 übergreift. Vielmehr ist es neben oder seitlich der Sicke 20 angeordnet, insbesondere in bzw. auf einem (planen) Haltebereich 27 des Wärmeleitbleches 14.

An diesem ist das Element 23" mit einem eigenen (ebenfalls planen) Haltebereich 40 angeordnet, insbesondere verklebt (die zwischen den Bereichen 40 und 27 angeordnete Klebeschicht ist, wie bei den anderen Ausführungsbeispielen, der Übersicht halber nicht dargestellt). Während der Haltebereich 40 von einem Schenkel des Elementes 23" bereitgestellt wird, stellt der andere Schenkel des Elementes 23" den Flügel 22 dar. Dieser steht in dem dargestellten Ausführungsbeispiel exemplarisch in einem rechten Winkel von φ = 90 Grad von dem Wärmeleitblech 14 ab.

Dieses Ausführungsbeispiel verdeutlicht somit insbesondere, dass das den Flügel 22 bereitstellende, separate Element 23" zwar als Aufsatzelement für das Wärmeleitblech 14 ausgebildet sein kann, aber nicht zwingend dessen Sicke 20 überdecken muss.

Zu dem Ausführungsbeispiel gemäß den Fig. 15a und 15b wird insbesondere darauf verwiesen, dass dieses ansonsten den bisher genannten Ausführungsbeispielen entsprechen kann, so dass analog auf die Ausführungen zu den Fig. 5 bis 14 verwiesen werden kann, beispielsweise auf die Ausführungsbeispiele der Fig. 5 und 6. Dies gilt sowohl für geometrische Ausgestaltungen als auch Materialien, Befestigungsarten und ähnliches.

Zu den Fig. 15a und 15b sei abschließend angemerkt, dass in Fig. 15b ein Luftkanal 24 angedeutet ist, welcher sich zwischen dem Flügel 22 und entweder einem weiteren, nicht dargestellten Flügel (bspw. auch eines anderen Wärmeleitbleches) erstreckt, oder zwischen dem Flügel 22 und der Sicke 20. Je nach Ausführungsbeispiel und Höhe der Sicke 20 können auf diese Weise unterschiedliche, für den Anwendungsfall angemessene Luftkanäle 24 bereitgestellt werden.

Auch dieses Ausführungsbeispiel verbessert zudem durch die Flügel die Wärmeübertragung zwischen Rohr und Umgebung.

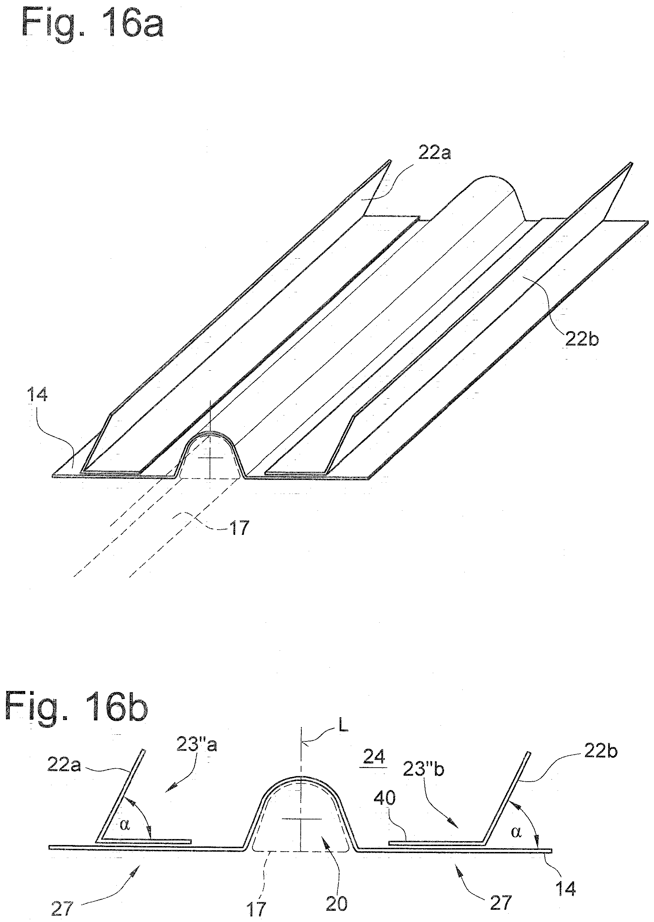

Gleiches gilt für das weitere Ausführungsbeispiel gemäß der Fig. 16a und 16b, wobei das Ausführungsbeispiel gemäß den Fig. 16a und 16b im Wesentlichen dem Ausführungsbeispiel gemäß den Fig. 15a und 15b entspricht, insbesondere auch was deren Ansicht angeht.

Das Ausführungsbeispiel gemäß den Fig. 16a und 16b weist im Vergleich zu dem Ausführungsbeispiel gemäß den Fig. 15a und 15b allerdings zwei exemplarische Unterschiede auf:
So ist einerseits das Aufsatzelement 23"b rechts der Sicke mit einem Flügel 22b ausgestattet, welcher nicht in einem rechten Winkel vom Wärmeleitblech 14 absteht, sondern in einem Winkel α zwischen 0 und 90 Grad, beispielsweise von etwa 45 Grad.

Der andere Unterschied besteht darin, dass bezüglich der Figurenansicht auch links der Sicke 20 ein weiteres Aufsatzelement 23"a vorgesehen ist.

Mit anderen Worten soll das Ausführungsbeispiel gemäß den Fig. 16a und 16b verdeutlichen, dass ein Aufsatzelement, wie es in Fig. 15a und 15b dargestellt wird, auch beidseitig der Sicke 20 an dem Wärmeleitblech 14 befestigbar, insbesondere verklebbar, ist.

Lediglich exemplarisch zeigen die Fig. 16a und 16b, dass die beiden Flügel 22a und 22b "in die gleiche Richtung" abstehen können. Weist der Flügel 22b also einen Anstellwinkel α auf, so weist der Flügel 22a einen Anstellwinkel von 180 Grad - α auf. Daher ist in Fig. 16b der Innenwinkel des Aufsatzelementes 23"a mit α bezeichnet, da dieser dem eigentlichen Anstellwinkel bzw. Außenwinkel des anderen Aufsatzelementes 23"b entspricht.

Natürlich ist auch ein Ausführungsbeispiel von der Erfindung umfasst, bei welchem sich die Anstellwinkel der beiden Aufsatzelemente spiegelsymmetrisch entsprechen (also beide den Wert α betragen) oder bei welchem diese jeweils völlig andere Anstellwinkel einnehmen. All dies soll von der Erfindung umfasst sein.

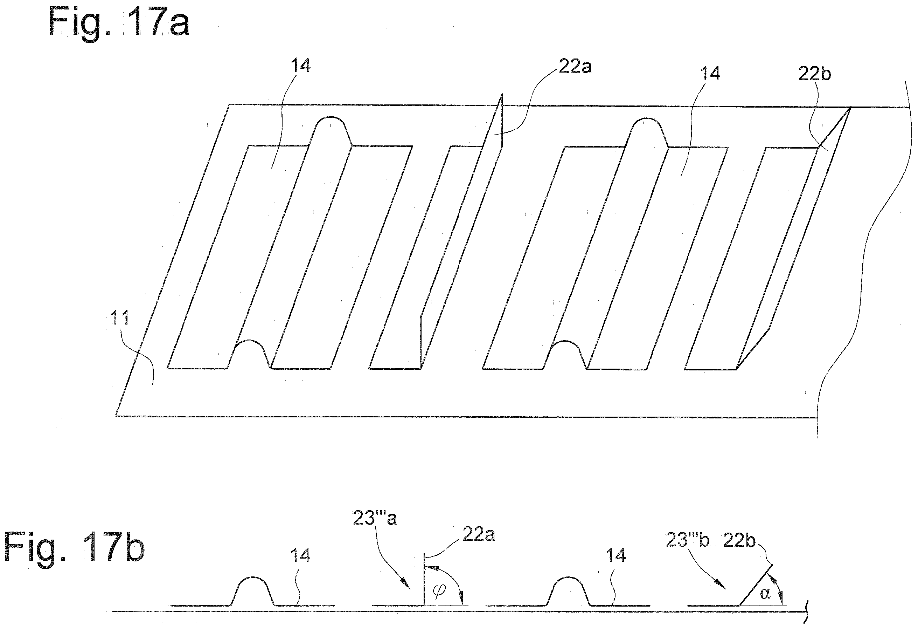

Schließlich zeigt ein letztes Ausführungsbeispiel gemäß den Fig. 17a und 17b eine weitere besondere Ausführung eines separaten, den Flügel bereitstellenden Elementes: So zeigt Fig. 17a in einer schematischen, abgebrochenen Aufsicht einen Teil eines Flächenwärmetauschers bestehend aus einer herkömmlichen Trägerplatte 11 mit zwei darauf montierten bzw. verklebten Wärmeleitblechen 14. Eine derartige Trägerplatte 11 kann beispielsweise in ein Segel- oder in eine Haltekassette eingelegt oder dort verklebt werden. Alternativ kann die Platte 11 auch die Innenseite einer Haltekassette direkt darstellen.

Entscheidend ist vorliegend, dass die Flügel 22 in diesem Beispiel nicht von einem Wärmeleitblech 14 bereitgestellt werden. Vielmehr sind separate Elemente 23‴ vorgesehen, welche die Flügel 22 bereitstellen.

So zeigt das Ausführungsbeispiel gemäß den Fig. 17a und 17b sehr exemplarisch ein zwischen den Wärmeleitblechen, angeordnetes, diese jedoch nicht kontaktierendes separates Element 23‴a (rein exemplarisch mit einem Anstellwinkel φ von etwa 90 Grad).

Zudem ist im rechten Bildbereich der Fig. 17a und 17b ein zweites separates Element 23‴b dargestellt, mit einem beispielsweise spitzen Anstellwinkel α.

Auch dieses Element 23‴b ist von dem zu ihm nächsten Wärmeleitblech beabstandet angeordnet.

Beide Elemente 23‴ sind dabei an der Trägerplatte 11 festgelegt, insbesondere dort (vorzugsweise vollflächig mit ihrem Anlagebereich) verklebt.

Auch für dieses Ausführungsbeispiel mit den gänzlich separaten flügelbereitstellenden Elementen gelten die gleichen Materialeigenschaften und Befestigungsmöglichkeiten, wie zu den anderen Ausführungsbeispielen ausgeführt.

Zu allen Ausführungsbeispielen sei schließlich angemerkt, dass diese jeweils exemplarisch dargestellt sind, und insbesondere in den dargestellten geometrischen Verhältnissen (Länge zu Breite) und der Anordnung der diversen Elemente variieren können.

## Patentansprüche

1. Flächenwärmetauscher (10), insbesondere zur Klimatisierung von Räumen (16), umfassend eine Montageplatte (11, 12) und ein Rohrsystem (13) zum Leiten eines Mediums entlang der Montageplatte (11, 12), wobei das Rohrsystem (13) mithilfe von das Rohrsystem (13) beidseitig-geschlossen übergreifenden, streifenartigen Wärmeleitblechen (14) an der Montageplatte (11) festgelegt ist, **dadurch gekennzeichnet, dass** den Wärmeleitblechen (14) jeweils mindestens ein von der Montageplatte (11, 12) abstehender Flügel (22) zugeordnet ist, welcher von einem in Bezug auf das Wärmeleitblech und die Montageplatte (11, 12) gesonderten Element (23, 23', 23", 23‴) ausgebildet wird.

2. Flächenwärmetauscher (10) nach Anspruch 1, **dadurch gekennzeichnet, dass** die Wärmeleitbleche (14) und das gesonderte Element (23) aus demselben Material bestehen, insbesondere aus Aluminium.

3. Flächenwärmetauscher (10) nach Anspruch 1, **dadurch gekennzeichnet, dass** das gesonderte Element (23, 23', 23", 23‴) aus Kunststoff besteht.

4. Flächenwärmetauscher (10) nach einem der vorangegangenen Ansprüche, **dadurch gekennzeichnet, dass** der Flügel (22) mindestens einen Diffusor (28, 28') aufweist, welcher insbesondere eine Flügel-Durchtrittsöffnung (29, 29') umfasst oder von dieser gebildet wird.

5. Flächenwärmetauscher (10) nach Anspruch 4, **dadurch gekennzeichnet, dass** der Diffusor (28') einen, insbesondere aus der Flügelebene hervorstehenden, Vorsprung (32) aufweist, welcher vorzugsweise im Wesentlichen kongruent zu einer Flügel-Durchtrittsöffnung (29') des Diffusors (28') ausgebildet ist.

6. Flächenwärmetauscher (10) nach einem der vorangegangenen Ansprüche, **dadurch gekennzeichnet, dass** der Flächenwärmetauscher (10) mehrere, im Wesentlichen übereinander angeordnete Flügel (22, 22') aufweist, vorzugsweise beidseitig jeweils ein Paar.

7. Flächenwärmetauscher (10) nach einem der vorangegangenen Ansprüche, **dadurch gekennzeichnet, dass** das gesonderte Element als Aufsatzelement (23, 23', 23") ausgebildet ist.

8. Flächenwärmetauscher (10) nach Anspruch 7, **dadurch gekennzeichnet, dass** das Aufsatzelement (23), insbesondere ausschließlich, im Bereich einer Sicke (20) eines Wärmeleitbleches (14) auf diesem aufsitzt.

9. Flächenwärmetauscher (10) nach Anspruch 7, **dadurch gekennzeichnet, dass** das Aufsatzelement (23', 23"), insbesondere ausschließlich, im Bereich eines, insbesondere planen, Auflagebereiches (27) eines Wärmeleitbleches (14) auf diesem aufsitzt.

10. Flächenwärmetauscher (10) nach einem der Ansprüche 1 bis 6, **dadurch gekennzeichnet, dass** das gesonderte Element (23‴) von einem Wärmeleitblech (14) beabstandet ist.

11. System umfassend mindestens einen ersten und einen zweiten Flächenwärmetauscher (10) nach einem der Ansprüche 1 bis 10, wobei mindestens einer der Flügel (22) des ersten Flächenwärmetauschers einen anderen Anstellwinkel (α, β, γ) zur Montageplatte (11, 12) aufweist als mindestens einer der Flügel (22) des zweiten Flächenwärmetauschers (10).

12. Verfahren zum Leiten von Luft und/oder zur Wärmeübertragung entlang eines Flächenwärmetauschers (10) gemäß einem der Ansprüche 1 bis 10 und/oder zur Akustikdämmung desselben, bei welchem ein Rohrsystem (13), zum Leiten eines Mediums, mithilfe von das Rohrsystem (13) beidseitig-geschlossen übergreifenden Wärmeleitblechen (14) an einer Montageplatte (11) festgelegt ist, wobei den Wärmeleitblechen (14) jeweils mindestens ein von der Montageplatte (11) abstehender Flügel (22) zugeordnet ist, welcher die Luft leitet und/oder Wärme überträgt und/oder die Akustik dämmt.

13. Verfahren zur Herstellung eines Flächenwärmetauschers (10) gemäß einem der Ansprüche 1 bis 10 unter Verwendung einer Montageplatte (11, 12) und eines Rohrsystems (13) zum Leiten eines Mediums entlang der Montageplatte (11, 12), wobei das Rohrsystem (13) mithilfe von das Rohrsystem (13) beidseitig-geschlossen übergreifenden Wärmeleitblechen (14) an der Montageplatte (11) festgelegt wird, und wobei den Wärmeleitblechen (14) jeweils mindestens ein von der Montageplatte (11, 12) abstehender Flügel (22) zugeordnet wird.

## Claims

1. Surface heat exchanger (10), in particular for air-conditioning rooms (16), comprising a mounting plate (11, 12) and a pipe system (13) for conducting a medium along the mounting plate (11, 12), the pipe system (13) being fixed to the mounting plate (11) with the aid of strip-like heat conducting plates (14) which overlap the pipe system (13) on both sides in a closed manner, **characterised in that** at least one wing (22) projecting from the mounting plate (11, 12) is associated with each of the heat conducting plates (14), which wing is formed by an element (23, 23', 23", 23‴) that is separate with respect to the heat conducting plate and the mounting plate (11, 12).

2. Surface heat exchanger (10) according to claim 1, **characterised in that** the heat conducting plates (14) and the separate element (23) are made of the same material, in particular aluminium.

3. Surface heat exchanger (10) according to claim 1, **characterised in that** the separate element (23, 23', 23", 23‴) is made of plastic.

4. Surface heat exchanger (10) according to one of the preceding claims, **characterised in that** the wing (22) has at least one diffuser (28, 28'), which in particular comprises or is formed by a wing through-opening (29, 29').

5. Surface heat exchanger (10) according to claim 4, **characterised in that** the diffuser (28') has a projection (32), in particular projecting from the plane of the wing, which is preferably formed substantially congruently with a wing through-opening (29') of the diffuser (28').

6. Surface heat exchanger (10) according to one of the preceding claims, **characterised in that** the surface heat exchanger (10) has a plurality of wings (22, 22') arranged substantially one above the other, preferably a pair on each side.

7. Surface heat exchanger (10) according to one of the preceding claims, **characterised in that** the separate element is designed as a cap element (23, 23', 23").

8. Surface heat exchanger (10) according to claim 7, **characterised in that** the cap element (23) rests, in particular exclusively, in the region of a bead (20) of a heat conducting plate (14) on the latter.

9. Surface heat exchanger (10) according to claim 7, **characterised in that** the cap element (23', 23") rests on a heat conducting plate (14), in particular exclusively, in the region of a, in particular flat, support region (27) of the latter.

10. Surface heat exchanger (10) according to one of claims 1 to 6, **characterised in that** the separate element (23‴) is spaced from a heat conducting plate (14).

11. System comprising at least a first and a second surface heat exchanger (10) according to one of claims 1 to 10, wherein at least one of the wings (22) of the first surface heat exchanger has a different angle of attack (α, β, γ) to the mounting plate (11, 12) than at least one of the wings (22) of the second surface heat exchanger (10).

12. Method for conducting air and/or for heat transfer along a surface heat exchanger (10) according to one of claims 1 to 10 and/or for acoustic insulation of the same, in which a pipe system (13) for conducting a medium is fixed to a mounting plate (11) by means of heat conducting plates (14) which overlap the pipe system (13) in a closed manner on both sides, is fixed to a mounting plate (11) with the aid of heat conducting plates (14) which overlap the pipe system (13) on both sides in a closed manner, wherein at least one wing (22) projecting from the mounting plate (11) is associated with each of the heat conducting plates (14), which wing conducts the air and/or transmits heat and/or insulates the acoustics.

13. Method for producing a surface heat exchanger (10) according to one of claims 1 to 10 using a mounting plate (11, 12) and a pipe system (13) for guiding a medium along the mounting plate (11, 12), wherein the pipe system (13) is fixed to the mounting plate (11) with the aid of heat conducting plates (14) overlapping the pipe system (13) on both sides in a closed manner, and wherein at least one wing (22) projecting from the mounting plate (11, 12) is assigned to each of the heat conducting plates (14).

## Revendications

1. Échangeur de chaleur de surface (10), en particulier pour la climatisation de locaux (16), comprenant une plaque de montage (11, 12) et un système de tuyaux (13) pour guider un milieu le long de la plaque de montage (11, 12), dans lequel le système de tuyaux (13) est fixé à la plaque de montage (11) à l'aide de plaques thermoconductrices (14) en forme de lames chevauchant le système de tuyaux (13) de manière fermée des deux côtés, **caractérisé en ce qu'**au moins une ailette (22) qui fait saillie de la plaque de montage (11, 12) est associée respectivement aux plaques thermoconductrices (14) et conçue par un élément (23, 23', 23'', 23‴) distinct par rapport à la plaque thermoconductrice et à la plaque de montage (11, 12).

2. Échangeur de chaleur de surface (10) selon la revendication 1, **caractérisé en ce que** les plaques thermoconductrices (14) et l'élément distinct (23) sont composés du même matériau, en particulier en aluminium.

3. Échangeur de chaleur de surface (10) selon la revendication 1, **caractérisé en ce que** l'élément distinct (23, 23', 23'', 23‴) est composé de matière plastique.

4. Échangeur de chaleur de surface (10) selon une des revendications précédentes, **caractérisé en ce que** l'ailette (22) présente au moins un diffuseur (28, 28') qui comprend en particulier une ouverture de passage d'ailette (29, 29') ou est formé par celle-ci.

5. Échangeur de chaleur de surface (10) selon la revendication 4, **caractérisé en ce que** le diffuseur (28') présente une saillie (32), qui dépasse en particulier du plan d'ailette et qui de préférence coïncide sensiblement avec une ouverture de passage d'ailette (29') du diffuseur (28').

6. Échangeur de chaleur de surface (10) selon une des revendications précédentes, **caractérisé en ce que** l'échangeur de chaleur de surface (10) présente plusieurs ailettes (22, 22') disposées sensiblement les unes au-dessus des autres, de préférence des deux côtés, respectivement une paire.

7. Échangeur de chaleur de surface (10) selon une des revendications précédentes, **caractérisé en ce que** l'élément distinct est conçu sous la forme d'un élément de fixation (23, 23', 23").

8. Échangeur de chaleur de surface (10) selon la revendication 7, **caractérisé en ce que** l'élément de fixation (23) se fixe, en particulier exclusivement, au niveau d'une nervure (20) d'une plaque thermoconductrice (14) sur cette dernière.

9. Échangeur de chaleur de surface (10) selon la revendication 7, **caractérisé en ce que** l'élément de fixation (23', 23'') se fixe, en particulier exclusivement, au niveau d'une zone d'appui (27), en particulier plane, d'une plaque thermoconductrice (14) sur cette dernière.

10. Échangeur de chaleur de surface (10) selon une des revendications 1 à 6, **caractérisé en ce que** l'élément distinct (23‴) est distant d'une plaque thermoconductrice (14).

11. Système comprenant au moins un premier et un second échangeurs de chaleur de surface (10) selon une des revendications 1 à 10, dans lequel au moins une des ailettes (22) du premier échangeur de chaleur de surfaces présente un autre angle d'incidence (α, β, γ) par rapport à la plaque de montage (11, 12) qu'au moins une des ailettes (22) du second échangeur de chaleur de surfaces (10).

12. Procédé destiné à guider de l'air et/ou transmettre de la chaleur le long d'un échangeur de chaleur de surface (10) selon une des revendications 1 à 10 et/ou à isoler de manière acoustique celui-ci, dans lequel un système de tuyaux (13), pour guider un milieu, est fixé à une plaque de montage (11) à l'aide de plaques thermoconductrices (14) chevauchant le système de tuyaux (13) de manière fermée des deux côtés, dans lequel au moins une ailette (22) qui fait saillie de la plaque de montage (11, 12) est associée respectivement aux plaques thermoconductrices (14) et guide l'air et/ou transmet la chaleur et/ou isole de manière acoustique.

13. Procédé destiné à fabriquer un échangeur de chaleur de surface (10) selon une des revendications 1 à 10 en utilisant une plaque de montage (11, 12) et un système de tuyaux (13) pour guider un milieu le long de la plaque de montage (11, 12), dans lequel le système de tuyaux (13) est fixé à la plaque de montage (11) à l'aide de plaques thermoconductrices (14) chevauchant le système de tuyaux (13) de manière fermée des deux côtés, et dans lequel au moins une ailette (22) qui fait saillie de la plaque de montage (11, 12) est associée respectivement aux plaques thermoconductrices (14).
